Europäisches Patentamt

European Patent Office

Office européen des brevets

(11) Veröffentlichungsnummer: **0 031 461**
**B1**

(12) **EUROPÄISCHE PATENTSCHRIFT**

(45) Veröffentlichungstag der Patentschrift:
**12.10.83**

(21) Anmeldenummer: **80107367.7**

(22) Anmeldetag: **26.11.80**

(51) Int. Cl.³: **G 11 B 5/30**, G 11 B 5/40

(54) Magnetoresistiver Abtastkopf.

(30) Priorität: **20.12.79 US 105480**

(43) Veröffentlichungstag der Anmeldung:
**08.07.81 Patentblatt 81/27**

(45) Bekanntmachung des Hinweises auf die Patenterteilung:
**12.10.83 Patentblatt 83/41**

(84) Benannte Vertragsstaaten:
**DE FR GB**

(56) Entgegenhaltungen:
„IBM Technical Disclosure Bulletin", Band 22,
Nr. 5, Oktober 1979, Armonk, New York US R. W.
Arnold et al.: „Wear-resistant substrates for MR
heads with good thermal conductivity", Seiten
2149-2150.
„IBM Technical Disclosure Bulletin", Band 21,
Nr. 5, Oktober 1978, Armonk New York US J. E.
Wallace: „Magnetoresistive head", Seiten 1834-
1835.
„IBM Technical Disclosure Bulletin", Band 20,
Nr. 9, Februar 1978, Armonk, New York US
D. S. Garriss et al.: „Wear-resistant sensor tip",
Seite 3619.                                    →

(73) Patentinhaber: **International Business Machines
Corporation, Old Orchard Road, Armonk, N.Y. 10504 (US)**

(72) Erfinder: **Daughenbaugh, Gerald Allen, 11221 East
Stampede Place, Tucson Ariz. 85715 (US)**
Erfinder: **Koob, Philip William, 119 Country Club Road,
Concord, N.C. (US)**
Erfinder: **Moxley, Arthur Eugene, 2669 West Ninth Ave.,
Longmont, CO 80501 (US)**
Erfinder: **Wallace, Joseph Eugene, 1200 Queens Rd. 111,
CHarlotte, N.C. (US)**

(74) Vertreter: **Gaugel, Heinz, Dipl.-Ing., Schönaicher
Strasse 220, D-7030 Böblingen (DE)**

→ „Philips Technical Review", Band 37, Nr. 2/3,
1977, Eindhoven NL W. J. Van Gestel et al.: „Readout of a magnetic tape by the magnetoresistance
effect", Seiten 42-50.
„IBM Technical Disclosure Bulletin", Band 17,
Nr. 9, Februar 1975, Armonk New York US
J. A. Barkley et al.: „Thin-Film Transducer Protection" Seite 2549.

Magnetoresistiver Abtastkopf

Die Erfindung betrifft einen magnetoresistiven Abtastkopf mit auf einem Silicium-Träger aufgebrachten magnetoresistiven Element, das von einer Saphirschicht abgedeckt ist, wobei das magnetoresistive Element gegenüber der Kopffläche zurückgesetzt ist und wobei auch auf der anderen Seite des Silicium-Trägers eine Saphirschicht vorgesehen ist. Ein entsprechender Abtastkopf ist bereits im „IBN Technical Disclosure Bulletin", Vol. 22, Nr. 5, Oktober 1979, Seiten 2149 und 2150 beschrieben.

Die Verwendung magnetoresistiver Elemente als Sensoren für das Lesen magnetischer Aufzeichnungen ist allgemein bekannt. Magnetoresistive Sensoren sind jedoch u.a. empfindlich gegenüber thermisch verursachtem Rauschen. Zur Reduzierung dieser thermischen Rauschprobleme ist es bekannt, magnetoresistive Elemente auf beispielsweise einen Silicium-Träger oder ähnliches Material aufzubringen und in der Magnetkopfanordnung zu montieren. Silicium ist leicht herzustellen und ermöglicht eine gute Wärmeleitung. Jedoch hat sich herausgestellt, dass magnetoresistive Abtastköpfe mit Silicium-Trägern einer erheblichen Abnutzung beim Abtasten magnetischer Medien unterliegen, die mit Partikeln verschmutzt sind.

Hier will die Erfindung Abhilfe Schaffen. Die Erfindung, wie sie im Patentanspruch gekennzeichnet ist, löst die Aufgabe, einen magnetoresistiven Abtastkopf zu schaffen, der wesentlich verbesserte Abriebeigenschaften bei niedriger Empfindlichkeit gegenüber thermisch verursachtem Rauschen aufweist.

Die durch die Erfindung erreichten Vorteile sind im wesentlichen darin zu sehen, dass durch die Verwendung eines gut wärmeleitfähigen Trägermaterials das Problem von thermisch verursachtem Rauschen wesentlich vermindert worden ist und dass durch die Abdeckung des Trägers mit seinem magnetoresistiven Element durch Deckschichten, welche wesentlich härter als das Trägermaterial sind, die Abriebfestigkeit des magnetoresistiven Abtastkopfes und damit seine lebensdauer entscheidend erhöht ist. Insgesamt zeichnet sich der erfindungsgemäss gestaltete magnetoresistive Abtastkopf durch eine hohe Lebensdauer, niedrige Wärmeempfindlichkeit bei guter Wärmeleitfähigkeit und einfache Herstellbarkeit aus.

Im folgenden wird ein Ausführungsbeispiel der Erfindung anhand von lediglich einen Ausführungsweg darstellenden Zeichnungen näher erläutert.

Es zeigt:

Fig. 1 eine vereinfachte Darstellung eines magnetoresistiven Abtastkopfes mit einem magnetoresistiven Element, wie es aus dem Stand der Technik bekannt ist;

Fig. 2 vereinfacht eine Darstellung des neugestalteten magnetoresistiven Abtastkopfes gemäss der Erfindung;

Fig. 3 eine Darstellung der dimensionsmässigen Zusammenhänge des gestalteten magnetoresistiven Abtastkopfes und

Fig. 4A und 4B eine Vorder- und eine Seitenansicht der magnetoresistiven Abtastvorrichtung, hergestellt gemäss der Erfindung.

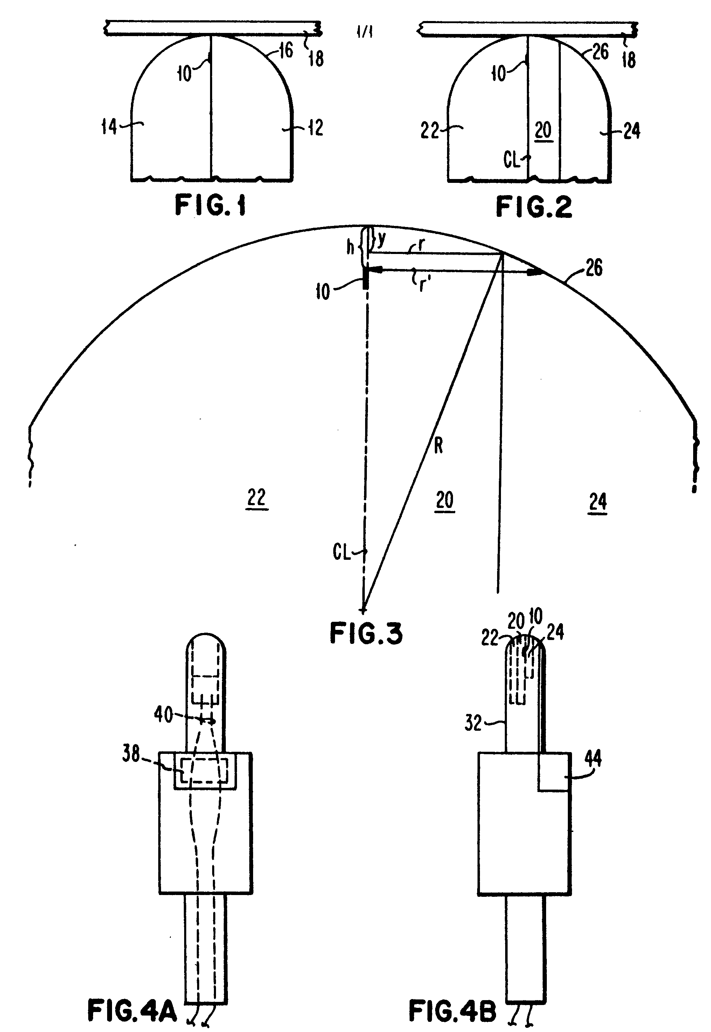

Fig. 1 zeigt ein Beispiel eines bekannten magnetoresistiven Abtastkopfes, welcher ein magnetoresistives Element 10 enthält, das zusammen mit den nötigen elektrischen Leitungen und einer Aluminiumoxid-Schutzschicht auf einem Träger 12 aufgebracht ist, der aus Silicium bestehen kann. Eine Saphirschicht 14 ist auf das Siliciumsubstrat aufgeklebt und bedeckt damit das magnetoresistive Element 10. Der Kopf hat eine sphärisch geformte Kopffläche 16, die in Übertragungsbeziehung mit einem magnetischen Medium 18, beispielsweise einem Magnetband, steht.

Bei dem in Fig. 1 dargestellten Kopf mit Silicium und Saphir wird der meiste Abrieb am Siliciummaterial erfolgen, verglichen mit dem härteren Saphirmaterial, wie dies Experimente zeigen. Im Ergebnis entsteht bei starker Benutzung des Kopfes eine immer grösser werdende Abtragung der Siliciumschicht, so dass schliesslich das magnetoresistive Element 10 entweder offen daliegt oder abgetragen wird. Liegt das magnetoresistive Element offen da, dann kann der Kopf aufgrund von Korrosionserscheinungen ausfallen. Auf jeden Fall tritt eine Unterbrechung des elektrischen Stromfades auf.

Gemäss der in Fig. 2 dargestellten Form wird der erfindungsgemäss gestaltete Kopf in einer Sandwich-Konfiguration hergestellt, bei der ein beispielsweise aus Silicium gebildeter Träger 20, der das magnetoresistive Element 10 trägt, beidseitig von Deckschichten 22 und 24 umgeben ist, die insbesondere aus Saphir bestehen können. Das Material der Schichten 22 und 24 ist härter als das jenige des Trägers, so dass kein stärkeres Abtragen der Trägerschicht erfolgt und somit das gegenüber der Kopffläche 26 zurückgesetzte magnetoresistive Element 10 stärker abgetragen wird als die Deckschichten. Als Material für die Trägerschicht kann auch anderes als Silicium verwendet werden. So können beispielsweise Borsilicat oder Ferrit als Material für den Träger benutzt werden. In gleicher Weise kann das härtere Material für die Deckschichten anderes als Saphir sein, nämlich beispielsweise Diamant, Aluminium, Keramik oder Siliciumnitrid.

Es ist herausgefunden worden, dass im Zusammenhang mit vorliegender Erfindung die Abmessungen der aufeinanderliegen den Teile relativ zu der gekrümmten Kopffläche 26 und der Mittellinie CL eine bestimmte Beziehung haben sollten. Dabei wird eine Beziehung zwischen dem Radius R der sphärisch gestalteten Kopffläche 26 und der Höhe h hergestellt, mit der bzw. um die das magnetoresistive Element 10 gegenüber der Kopffläche 26 bzw. deren Sattel bzw. Spitze zurückgesetzt ist. Diese Beziehungen sind insbesondere in Fig. 3 näher dargestellt. Die Dicke r des aus Silicium bestehenden Trägerteils 20 muss grösser als 0 sein und muss kleiner sein als r', wobei r' = $\sqrt{2Rh}$ ist.

Gemäss einem Zahlenbeispiel, bei dem R zu 1,27 mm gewählt ist und das magnetoresistive Element 10 mit einem Abstand bzw. einer Höhe h von ca. 0,019 mm. Die Dicke r des aus Silicium bestehenden Trägers 20 muss kleiner als ca. 0,2184 mm sein, um eine wesentliche Verbesserung der Abriebfestigkeit zu erreichen. Zusätzlich bestimmt die Dicke r des aus Silicium bestehenden Trägers 20 die Wärmeableitung und damit das thermische Rauschen. Bei der hiesigen Ausführungsform beträgt die Dicke der Saphir-Deckschicht 22 ca. 0,33 mm und die Dicke der Saphir-Deckschicht 24 ungefähr 0,2 mm.

Während des Betriebs der Abtastanordnung und nach einem intensiven Gebrauch für das Lesen von Daten von einem Aufzeichnungsträger ist der obere Teil des aus Silicium bestehenden Trägers 20 abgeschliffen und um einen Abstand y erniedrigt worden. Ab diesem Punkt steuern bzw. bestimmen die Saphir-Deckschichten 22 und 24 das Abtragverhalten des magnetoresistiven Abtastkopfes. Das magnetoresistive Element 10 ist innerhalb der Abtastanordnung relativ zu der Kopffläche 26 und dem aufliegenden magnetischen Medium 18 an einem Ort angeordnet, an dem es ohne Datensignalverminderung aufgezeichnete Daten effektiv abtasten kann. Insbesondere ist dafür Sorge getragen, dass das magnetoresistive Element im Zustand magnetischer Sättigung betrieben wird.

Gemäss der Darstellung in den Fig. 4A und 4B wird beim Aufbau eines magnetoresistiven Abtastkopfes gemäss vorliegender Erfindung die Saphir-Deckschicht 22 auf die Plastikgehäuse 32 geklebt. Dann wird auf die Deckschicht 22 ein Siliciumchip 20, auf dem das magnetoresistive Element 10 aufgebracht ist, aufgeklebt, Anschliessend wird die weitere Saphir-Deckschicht 24 auf das Siliciumchip 20 aufgeklebt. Das magnetoresistive Element 10 ist über Leitungen 40 mit einem Kondensator 38 verbunden, der zur Reduzierung des Einflusses statischer Elektrizität dient. Um die Anordnung zu vervollständigen, wird eine aus Plastik bestehende Kappe 44 aufgeklebt, um somit das Gehäuse für die magnetoresistive Abtastordnung zu vervollständigen.

Während des Betriebs der Abtastanordnung wird ein elektrischer Strom im Bereich von Milliampere durch das magnetoresistive Element geleitet. Der Widerstand dieses Elements wird entsprechend dem abgetasteten Magnetfeld geändert. Durch Abtastung der Spannung über dem magnetoresistiven Element werden die Datenbits entsprechenden Widerstandsänderungen gelesen.

## Patentanspruch

Magnetoresistiver Abtastkopf mit auf einem Silicium-Träger (20) aufgebrachten magnetoresistiven Element (10), das von einer Saphirschicht (22) abgedeckt ist, wobei das magnetoresistive Element (10) gegenüber der Kopffläche (26) zurückgesetzt ist und wobei auch auf der anderen Seite des Silicium-Trägers (20) eine Saphirschicht (24) vorgesehen ist, dadurch gekennzeichnet, dass

a) das magnetoresistive Element (10) ohne Zwischenschaltung einer Isolationsschicht auf dem Silicium-Träger (20) aufgebracht ist,

b) die Kopffläche (26) der zusammengefügten Schichten (10, 20, 22, 24) sphärisch ist,

c) das magnetoresistive Element (10) an der Mittellinie (CL) der Kopfanordnung bzw. der Grenzlinie zwischen Silicium-Träger (20) und Saphir-Deckschicht (22) angeordnet ist, und

d) die Dicke (r) des Silicium-Trägers (20) kleiner ist als $\sqrt{2Rh}$, wobei R den Radius der sphärisch gestalteten Kopffläche (26) darstellt und h die Tiefe darstellt, um welche das magnetoresistive Element (10) gegenüber der Spitze der Kopffläche (26) zurückgesetzt ist.

## Claim

Magneto-resistive sensing head with a magneto-resistive element (10) which is applied on a silicon carrier (20) and covered with a sapphire layer (22), the magneto-resistive element (10) being recessed relative to the head surface (26), and with a sapphire layer (24) being also provided on the side of the silicon carrier (20), characterized in that:

(a) the magneto-resistive element (10) is applied without an inserted insulating layer on the silicon carrier (20),

(b) the head surface (26) of the assembled layers (10, 20, 22, 24) is spherical,

(c) the magneto-resistive element (10) is arranged at the centre line (CL) of the head assembly, or the junction between silicon carrier (20) and sapphire covering layer (22), and

(d) the thickness (r) of the silicon carrier (20) is smaller than $\sqrt{2Rh}$, R representing the radius of the spherical head surface (26), and h representing the depth by which the magneto-resistive element (10) is recessed relative to the point of the head surface (26).

## Revendications

1. Tête de lecture magnétorésistante comportant un élément magnétorésistant (10), disposé sur un support de silicium (20) et recouvert d'une couche en saphir (22), qui est situé en retrait par rapport à la surface de ladite tête de lecture (26) et où il est prévu une couche en saphir (24) déposée sur l'autre face du support en silicium (20), caractérisée en ce que:

a) ledit élément magnétorésistant (10) est disposé directement sur le support en silicium (20) sans qu'il y ait de couche d'isolation intermédiaire,

b) la surface de ladite tête de lecture (26) constituée par des couches empilées (10, 20, 22, 24) est sphérique,

c) ledit élément magnétorésistant (10) est situé dans un plan médian (CL) de ladite tête de lecture, voire sur une ligne de démarcation entre, d'une part, le support en silicium (20) et, d'autre part, la couche de saphir (22), et

d) l'épaisseur (r) dudit support en silicium (20) est plus petite que $\sqrt{2Rh}$, R étant le rayon de la surface de forme sphérique de ladite tête de lecture (26) et h la profondeur de recul dudit élément magnétorésistant (10) par rapport au sommet de la surface de ladite tête de lecture (26).

**FIG.1**

**FIG.2**

**FIG.3**

**FIG.4A**

**FIG.4B**